# EUROPÄISCHE PATENTANMELDUNG

(11) **EP 3 404 444 A1**
(43) Veröffentlichungstag der Anmeldung: **21.11.2018**
(21) Anmeldenummer: 18168451.5
(22) Anmeldetag: 20.04.2018
(51) Int. Cl.: G01S 15/89, G01N 23/04

(54) **VERFAHREN ZUR VOLLSTÄNDIGKEITSKONTROLLE**

(30) Priorität: 21.04.2017 DE 102017108501
(71) Anmelder: Pepperl+Fuchs GmbH, 68307 Mannheim (DE)
(72) Erfinder: Steiner, Till, 68307 Mannheim (DE)
(74) Vertreter: Hamel, Armin

(57) **Zusammenfassung**

Beschrieben wird ein Verfahren zur Vollständigkeitskontrolle, wobei in einem ersten Schritt ein erstes Objekt einer Messstation (25) zugeführt wird, wobei die Messstation (25) mindestens einen fest angeordneten Ultraschallsensor aufweist und in einem zweiten Schritt das erste Objekt mittels Ultraschall vermessen wird, wobei durch eine künstliche Intelligenz (29) ein Abbild des Objekts erstellt wird. In einem dritten Schritt vergleicht die künstliche Intelligenz (29) das erhaltene Abbild mit einem Referenzabbild, wobei das Referenzabbild von einem vorgegebenen, vollständigen Objekt stammt.

## Beschreibung

Die Erfindung betrifft ein Verfahren zur Vollständigkeitskontrolle von Objekten.

Verfahren zur Vollständigkeitskontrolle dienen zur Qualitätssicherung. Dabei wird überprüft, ob alle für den ordnungsgemäßen Ablauf eines Prozesses benötigten Komponenten vorhanden sind. In der Regel handelt es sich bei dieser Vollständigkeitskontrolle um eine Anwesenheitskontrolle, bei der überprüft wird, ob alle Bestandteile eines Objekts, zum Beispiel eines Bauteils oder einer Baugruppe, an der richtigen Stelle vorhanden sind. Dabei wird beispielsweise mit mehreren Kameras oder Farbsensoren das Objekt aufgenommen. Anschließend wird mittels Bildverarbeitungsverfahren ein Bild des Objekts erstellt und überprüft, ob dieses Bild mit einem vorgegebenen Bild eines vollständigen Objekts übereinstimmt.

Allerdings werden für solche Bildverarbeitungsverfahren Rechner mit einer hohen Rechnerleistung benötigt.

Aufgabe der vorliegenden Erfindung ist es daher, ein Verfahren zur Vollständigkeitskontrolle bereitzustellen, bei dem Rechner eingesetzt werden können, die nur eine sehr niedrige Rechnerleistung besitzen.

Diese Aufgabe wird nach den Merkmalen des Patentanspruchs 1 gelöst.
[A01] Damit betrifft die Erfindung ein Verfahren zur Vollständigkeitskontrolle, das mehrere aufeinanderfolgende Schritte umfasst. In einem ersten Schritt wird ein erstes Objekt einer Messstation zugeführt, wobei die Messstation mindestens einen fest angeordneten Ultraschallsensor aufweist. Soll ein genaueres Abbild des Objekts erhalten werden, so kann die Messstation auch mehr als nur einen Ultraschallsensor, beispielsweise 2 bis 8 Ultraschallsensoren, enthalten.
   Anschließend wird in einem zweiten Schritt das erste Objekt mittels der Ultraschallsensoren in der Messstation vermessen, wobei Signale erhalten werden, die einer künstlichen Intelligenz zur Weiterverarbeitung bereitgestellt werden. Diese künstliche Intelligenz erstellt aus diesen Signalen ein Abbild des Objekts. Diese künstliche Intelligenz kann beispielsweise auf einem Computer, zum Beispiel einem einfachen PC, implementiert sein.
   Schließlich vergleicht die künstliche Intelligenz in einem dritten Schritt das erhaltene Abbild des Objekts mit einem Referenzabbild, wobei das Referenzabbild von mindestens einem vorgegebenen Objekt abgeleitet worden ist. Bei diesem vorgegebenen Objekt handelt es sich z.B. um ein vollständiges Objekt, das heißt um ein Objekt, das alle erforderlichen Bestandteile, nicht jedoch unnötige Bestandteile aufweist. Wahlweise können zur Verbesserung des Referenzabbilds auch zusätzlich Ableitungen von nicht vollständigen Objekten genutzt werden.
   Vorteilhaft bei diesem Verfahren ist, dass die künstliche Intelligenz aus den Ultraschallsensor-Daten ein Abbild des Objekts erstellt, das einfach und schnell mit dem Referenzabbild verglichen werden kann, ohne dass diese künstliche Intelligenz eine hohe Rechnerleistung aufweisen muss. Daher ist es möglich, als künstliche Intelligenz auch einen PC oder Microcontroller einzusetzen.
[A02] In einer vorteilhaften Ausführungsform wird ein zweites Objekt der Messstation zugeführt, sobald das erste Objekt vermessen wurde. So können zum Beispiel mehrere Objekte hintereinander auf einer Transportvorrichtung, zum Beispiel einem Förderband, bereitgestellt werden, welches die Objekte in Richtung der Messstation transportiert. Sobald ein Objekt vermessen wurde, wird dieses wieder aus der Messstation heraus bewegt und ein dahinter befindliches Objekt in die Messstation bewegt und dort vermessen.
[A03] Nachdem das erste Objekt entfernt und das darauffolgende zweite zu vermessende Objekt der Messstation zugeführt wurde, wird das zweite Objekt mittels Ultraschall vermessen. Die erhaltenen Signale werden an eine künstliche Intelligenz weitergegeben. Aus diesen Signalen erstellt die künstliche Intelligenz ein Abbild des Objekts. In einem weiteren Schritt vergleicht die künstliche Intelligenz das erhaltene Abbild mit dem Referenzabbild.
[A04] In einer weiteren bevorzugten Ausführungsform wird in einem vierten Schritt, das heißt nach dem das Objekt aus der Messstation entfernt wurde, dieses Objekt aussortiert, falls das erhaltene Abbild nicht mit dem Referenzabbild übereinstimmt. Stimmt das erhaltene Abbild des Objekts mit dem Referenzabbild überein, so wird das Objekt zu einer weiteren Station transportiert. Bei dieser Station kann es sich um eine Verpackungsstation, in der das Objekt verpackt wird, oder um eine Bearbeitungsstation, in der das Objekt weiterverarbeitet wird, handeln.

Ausführungsbeispiele werden im Folgenden anhand von Figuren beschrieben und näher erläutert. Es zeigen:
- Figur 1a: eine schematische Darstellung eines vorgegebenen, vollständigen Objekts;
- Figur 1b: eine schematische Darstellung eines zu messenden Objekts;
- Figur 2: eine perspektivische Ansicht einer Messstation, in der Objekte vermessen werden können;
- Figur 3: einen Schnitt A-A durch die in Figur 2 gezeigten Messstation;
- Figur 4: ein Innenleben der in Figur 2 gezeigten Messstation;
- Figur 5: ein Innenleben einer Variante der in Figur 4 gezeigten Messstation;
- Figur 6: eine weitere Variante einer Messstation und
- Figur 7: eine Unterseite der in Figur 6 gezeigten Messstation.

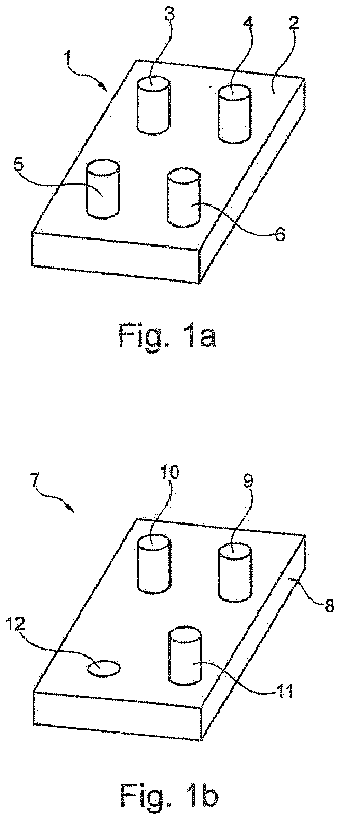

Figur 1a zeigt eine schematische Darstellung eines vorgegebenen Objekts 1, d.h. eines Objekts, das vollständig ist. Dieses Objekt 1 umfasst einen Grundkörper 2, in der vier gleiche Bauteile 3 bis 6 angeordnet sind. Dieses Objekt 1 wird mittels Ultraschall vermessen, so dass ein Abbild dieses Objekts 1 erhalten wird.

Dazu wird Wechselspannung an einen Ultraschallwandler eines Ultraschallsensors angelegt, wobei der Wandler vorzugsweise ein piezoelektrischer Quarz- oder Keramikschwinger ist. Der Ultraschallwandler ist jedoch in Figur 1a nicht gezeigt. Durch das Anlegen der Wechselspannung wird der Wandler zu Schwingungen angeregt, so dass Ultraschallwellen entstehen. Diese von dem Ultraschallsensor ausgesendeten Ultraschallwellen treffen auf das Objekt 1 und werden von diesem Objekt 1 wieder reflektiert. Diese reflektierten Ultraschallwellen können von dem Ultraschallwandler wieder empfangen werden. Die dadurch erhaltenen elektrischen Signale werden einer Vorverarbeitung einer Frequenz-, Phasen- oder Amplitudenauswertung unterzogen. Anschließend wird das Auswertungsergebnis einer künstlichen Intelligenz zugeführt, so dass schließlich ein Abbild des Objekts 1 erhalten wird. Dieses Abbild des Objektes 1 wird als Referenzabbild herangezogen. Dieses Referenzabbild kann dann mit den Abbildern von anderen Objekten, die ebenfalls mittels Ultraschall vermessen wurden, verglichen werden. Da Ultraschallmessungen an sich bekannt sind, wird nicht weiter im Detail darauf eingegangen.

In Figur 1b ist eine schematische Darstellung eines zu messenden Objekts 7 gezeigt. Auch dieses Objekt 7 weist einen Grundkörper 8 auf, in dem mehrere Bauteile 9 bis 11 angeordnet sind. Allerdings sind in diesem Grundkörper 8 nicht vier, sondern nur drei Bauteile 9 bis 11 angeordnet, so dass ein Bauteil fehlt und eine Lücke 12 entstehen lässt. Dies Objekt 7 ist damit nicht vollständig. Wird dieses Objekt 7 mittels Ultraschall vermessen, so wird ebenfalls ein Abbild erhalten. Dieses Abbild wird mit dem Referenzabbild verglichen. Durch den Abgleich des aufgenommenen Abbilds mit dem Referenzabbild kann somit festgestellt werden, dass das Objekt 7 nicht vollständig ist. Das unvollständige Objekt 7 kann deshalb sehr einfach und schnell detektiert und letztendlich aussortiert oder korrigiert werden. Damit wird verhindert, dass unvollständige Objekte weiterverarbeitet werden, oderfalls es sich bei diesen Objekten um Endprodukte handelt - dass unvollständige Objekte einen Produktionsbetrieb verlassen.

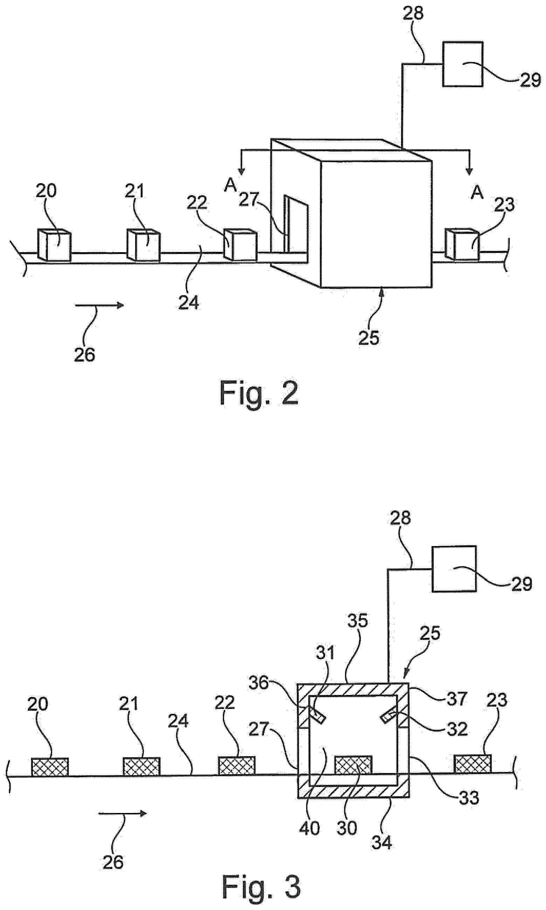

Figur 2 zeigt eine perspektivische Ansicht von mehreren Objekten 20 bis 23, die auf einer Transportvorrichtung 24 angeordnet sind. Bei der in Figur 2 gezeigten Transportvorrichtung 24 handelt es sich um ein Förderband, wobei die Transportrichtung 24 nur ausschnittsweise dargestellt ist. Die Objekte 20 bis 23 werden dabei in Richtung eines Pfeils 26 transportiert und gelangen über eine Öffnung 27 in eine Messstation 25. In dieser Messstation 25 werden die Objekte mittels Ultraschalisensoren vermessen. Die Ultraschallsensoren befinden sich jedoch innerhalb der Messstation 25, weshalb diese Ultraschallsensoren in der Figur 2 nicht zu sehen sind. Durch eine in Figur 2 nicht zu sehende Öffnung, die der Öffnung 27 gegenüberliegt, werden die Objekte mittels der Transportvorrichtung 24 wieder aus der Messstation 25 transportiert. Daher hat das Objekt 23 die Messstation 25 bereits wieder verlassen. In der Messstation 25 befindet sich ebenfalls ein Objekt, das gerade vermessen wird, jedoch in Figur 2 nicht zu sehen ist.

Die Messstation 25 ist über zumindest eine Leitung 28 mit einer künstlichen Intelligenz 29, vorzugsweise einem Rechner, verbunden. Die künstliche Intelligenz 29 sowie die zumindest eine Leitung 28 sind nur schematisch dargestellt. Sind mehrere Leitungen vorgesehen, so kann es sich auch um einen Leitungsstrang handeln. In dieser künstlichen Intelligenz 29 werden die von den Ultraschallsensoren erhaltenen elektrischen Signale einer Frequenz-, Phasen-oder Amplitudenauswertung unterzogen, so dass schließlich ein Abbild des Objekts erhalten wird, das gerade vermessen wird.

Figur 3 zeigt einen Schnitt A-A durch die in Figur 2 gezeigte Messstation 25, wobei durch die Transportvorrichtung 24 sowie durch die darauf angeordneten Objekte 20 bis 23 ebenfalls der Schnitt durchgeführt wurde. Über zumindest eine Leitung 28 ist die Messstation 25 mit einer künstlichen Intelligenz 29 verbunden.

Durch die Messstation 25 wird die Transportrichtung 24 in Richtung des Pfeils 26 geführt. Dabei können die auf der Transportrichtung 24 befindlichen Objekte 20 bis 22 durch die Öffnung 27 in die Messstation 25 gelangen. In der Messstation 25 befindet sich auf der Transportrichtung 24 ein Objekt 30, das mittels Ultraschall vermessen wird. In der Messstation 25 sind dazu zwei Ultraschallsensoren 31 und 32 vorgesehen. Nachdem das Objekt 30 vermessen wurde und die elektrischen Signale über die zumindest eine Leitung 28 an die künstliche Intelligenz 29 gesendet wurden, wird das Objekt 30 wieder aus der Messstation 25 bewegt. Dabei verlässt das Objekt 30 die Messstation 25 über eine Öffnung 33, die der Öffnung 27 gegenüberliegt. Da die Vermessung der Objekte sowie die Datenverarbeitung sehr schnell erfolgt, ist es nicht erforderlich, dass die Bewegung der Transportrichtung 24 in Richtung des Pfeils 26 unterbrochen wird, so dass der Transport der Objekte durch die Messstation 25 kontinuierlich erfolgen kann. Obwohl auch ein anderer Aufbau der Messstation 25 denkbar ist, so ist die Messstation 25 gemäß den Figuren 2 und 3 kastenförmig aufgebaut, so dass die Messstation 25 einen Boden 34 aufweist, wobei oberhalb des Bodens 34 die Transportrichtung 24 angebracht und bewegt wird. Über Seitenwände ist der Boden 34 mit einer Oberseite 35 verbunden, wobei in der Figur 3 nur die beiden Seitenwände 36, 37 und 40 zu sehen sind. Dabei ist es möglich, dass die Oberseite 35 als Deckel ausgebildet ist, wobei der Deckel 35 entfernbar ist, um bei Bedarf eine Wartung der Messstation 25 durchzuführen, ohne dass die Messstation 25 komplett entfernt werden muss.

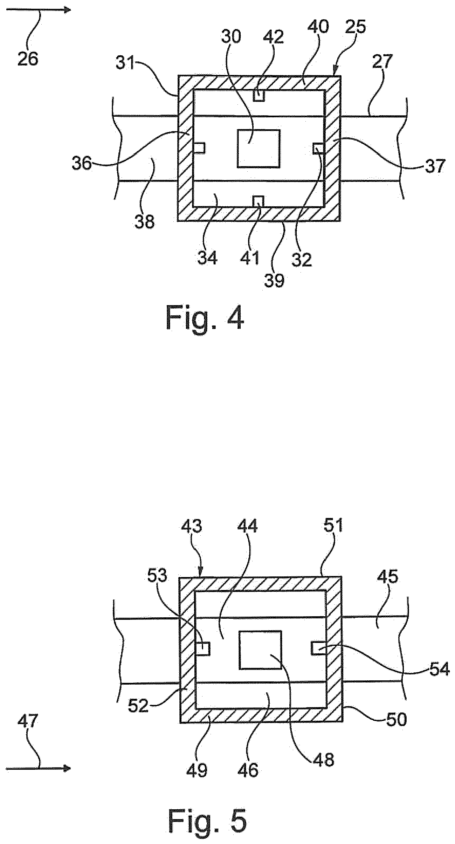

In Figur 4 ist ein Innenleben der in Figur 2 gezeigten Messstation 25 gezeigt, wobei die Oberseite 35 gemäß Figur 3 entfernt wurde. Damit wird direkt auf eine Oberseite 38 der Transportrichtung 24 und damit auf den Boden 39 der Messstation 25 geblickt. Die Transportrichtung 24 ist der Übersicht halber nur ausschnittsweise dargestellt. Auf dieser Oberseite 38 der Transportrichtung 24 befindet sich das Objekt 30, das mittels Ultraschall vermessen wird. Dazu weist die Messstation 25 an jeder Seitenwand 36, 37, 39, 40 jeweils einen Ultraschallsensor 31, 32, 41, 42 auf. Jeder dieser Ultraschallsensoren 31, 32, 41, 42 sendet Ultraschallwellen aus, die von dem Objekt 30 reflektiert werden und wieder von den in den Ultraschallsensoren 31, 32, 41, 42 angeordneten Wandlern (nicht zu erkennen, weil diese in den Ultraschallsensoren angeordnet sind) aufgenommen werden. Der von den Wandlern aufgenommene Ultraschall wird in elektrische Signale umgewandelt, die wiederum an die künstliche Intelligenz (in der Figur 4 nicht zu erkennen) weitergeleitet werden. Aus diesen elektrischen Signalen wird in der künstlichen Intelligenz schließlich ein Abbild des Objekts 30 erzeugt, wobei das Abbild mit einem Referenzabbild verglichen wird. Durch diesen Vergleich kann festgestellt werden, ob das Objekt 30 vollständig ist.

In Figur 5 ist eine Variante der in Figur 4 dargestellten Messstation gezeigt. Bei der in Figur 5 gezeigten Messstation 43 wird auf eine Oberseite 44 einer Transportvorrichtung 45 geblickt, wobei die Transportrichtung 45 oberhalb eines Bodens 46 der Messstation 43 bewegbar angeordnet ist. Die Transportrichtung 45 ist der Übersicht halber wieder nur ausschnittsweise gezeigt. Auch diese Messstation 43 weist vier Seitenwände 49 bis 52 sowie eine Oberseite auf, die auf den Seitenwänden 49 bis 52 angeordnet ist, wobei die Oberseite wiederum als abnehmbarer Deckel ausgebildet sein kann. Wie auch bei der Messstation gemäß Figur 4, so ist bei der Messstation 43 nach Figur 5 die Oberseite ebenfalls entfernt worden und damit nicht zu sehen. Die Transportvorrichtung 45 transportiert Objekte in Richtung eines Pfeils 47 in die Messstation 43, und, nachdem diese Objekte vermessen wurden, wieder aus dieser Messstation 43 heraus. Dazu weist die Messstation 43 zwei Öffnungen auf, wie dies auch bei der Messstation 25 gemäß den Figuren 2 bis 4 der Fall ist, jedoch in Figur 5 nicht zu sehen sind.

Auf der Oberseite 44 der Transportvorrichtung 45 ist ein Objekt 48 angeordnet, das sich in der Messstation 25 befindet und mittels Ultraschall vermessen wird. Dazu sind zwei Ultraschallsensoren 53 und 54 vorgesehen, die an zwei gegenüberliegenden Seitenwänden 50 bzw. 52 angebracht sind. Somit unterscheidet sich die Messstation 25 von der Messstation 43 nur durch die Anzahl der Ultraschallsensoren.

Vorzugsweise sind in einer solchen Messstation 2 bis 10 und besonders bevorzugt 2 bis 4 Ultraschallsensoren vorgesehen. Durch diese Anzahl an Ultraschallsensoren kann ein ausreichend genaues Abbild eines Objekts erhalten werden. Dabei ist es vorteilhaft, insbesondere dann mehr als einem Ultraschallsensor vorzusehen, wenn das Objekt einen sehr komplexen Aufbau besitzt.

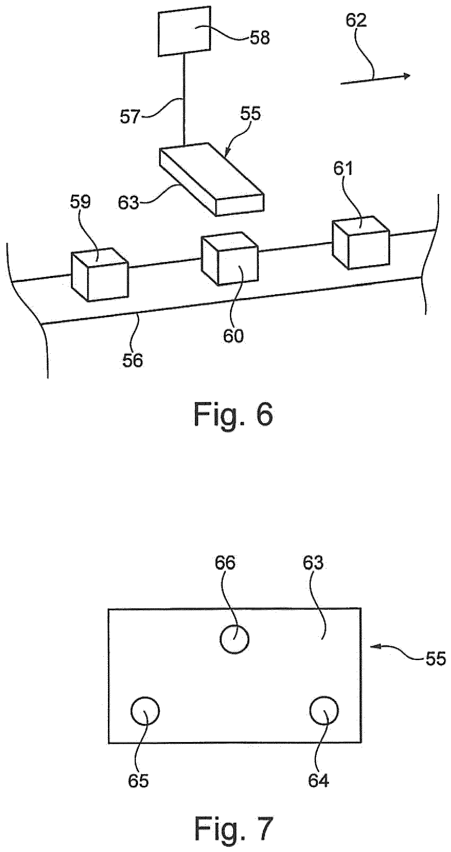

In Figur 6 ist eine weitere Variante einer schematisch dargestellten Messstation 55 gezeigt, die oberhalb einer Transportvorrichtung 56 angeordnet ist. Die Messstation 55 umfasst drei Ultraschallsensoren, die an einer Unterseite 63 der Messstation 55 angeordnet und daher nicht zu sehen sind. Die Messstation 55 ist über eine elektrische Leitung 57 mit einer künstlichen Intelligenz 58 verbunden. Auf der nur ausschnittsweise dargestellt Transportvorrichtung 56 befinden sich drei Objekte 59, 60, 61, die in Richtung eines Pfeils 62 bewegt werden. Das Objekt 60, das sich unterhalb der Messstation 55 befindet, wird gerade vermessen, wohingegen das Objekt 61 bereits vermessen und daher von der Messstation 55 fortbewegt wird. Die Messstation 55 kann über eine Halterung, die in Figur 6 jedoch nicht gezeigt ist, beispielsweise an einer Decke eines Gebäudes (nicht dargestellt), in der sich die Messstation 55 befindet, befestigt sein. Vorteilhaft bei dieser Messstation 55 ist, dass diese sehr leicht gewartet werden kann. So kann diese Messstation 55 nämlich einfach entfernt werden, wenn diese gewartet werden muss, und kann durch eine andere Messstation ersetzt werden.

In Figur 7 ist die Unterseite 63 der Messstation 55 dargestellt, so dass die drei Ultraschallsensoren 64, 65 und 66 zu erkennen sind.

In den Figuren 1a bis 6 wurden die Objekte nur schematisch dargestellt. Es versteht sich, dass mittels des Verfahrens alle erdenklichen Objekte mittels Ultraschall vermessen werden können. So kann es sich beispielsweise um Getränkekästen, die mit einer bestimmten Anzahl an Flaschen gefüllt sein müssen oder aber um Platinen, die mit einer bestimmten Anzahl an Bauteilen bestückt sein müssen, handeln.

Für die Vermessung von Objekten reicht es auch aus, wenn die Messstation nur einen Ultraschallsensor aufweist. Bei sehr komplexen Objekten oder wenn ein genaues Abbild erhalten werden soll, so bietet es sich an, mehr als nur einen Ultraschallsensor vorzusehen. So kann die Messstation bei Bedarf beispielsweise 2 bis 8, vorzugsweise 2 bis 4, Ultraschallsensoren aufweisen.

### Bezugszeichenliste

- 1: Objekt
- 2: Grundkörper
- 3: Bauteil
- 4: Bauteil
- 5: Bauteil
- 6: Bauteil
- 7: Objekt
- 8: Grundkörper
- 9: Bauteil
- 10: Bauteil
- 11: Bauteil
- 12: Lücke
- 13: -
- 14: -
- 15: -
- 16: -
- 17: -
- 18: -
- 19: -
- 20: Objekt
- 21: Objekt
- 22: Objekt
- 23: Objekt
- 24: Transportvorrichtung
- 25: Messstation
- 26: Pfeil
- 27: Öffnung
- 28: Leitung
- 29: Künstliche Intelligenz
- 30: Objekt
- 31: Ultraschallsensor
- 32: UItraschallsensor
- 33: Öffnung
- 34: Boden
- 35: Oberseite
- 36: Seitenwand
- 37: Seitenwand
- 38: Oberseite
- 39: Seitenwand
- 40: Seitenwand
- 41: Ultraschallsensor
- 42: Ultraschallsensor
- 43: Messstation
- 44: Oberseite
- 45: Transportvorrichtung
- 46: Boden
- 47: Pfeil
- 48: Objekt
- 49: Seitenwand
- 50: Seitenwand
- 51: Seitenwand
- 52: Seitenwand
- 53: Ultraschallsensor
- 54: Ultraschallsensor
- 55: Messstation
- 56: Transportvorrichtung
- 57: Leitung
- 58: Künstliche Intelligenz
- 59: Objekt
- 60: Objekt
- 61: Objekt
- 62: Pfeil
- 63: Unterseite
- 64: Sensor
- 65: Sensor
- 66: Sensor

## Patentansprüche

1. Verfahren zur Vollständigkeitskontrolle von Objekten, **dadurch gekennzeichnet, dass**
a) in einem ersten Schritt ein erstes Objekt (30, 48, 60) einer Messstation (25, 45, 55) zugeführt wird, wobei die Messstation (25, 45, 55) mindestens einen fest angeordneten Ultraschallsensor (31, 32, 41, 42, 53, 54, 64, 65, 66) aufweist,
b) in einem zweiten Schritt das erste Objekt (30, 48, 60) mittels Ultraschall vermessen wird, wobei Signale erhalten werden, die einer künstlichen Intelligenz (29, 58) bereitgestellt werden, wobei die künstliche Intelligenz (29, 58) aus diesen Signalen ein Abbild des Objekts (30, 48, 60) erstellt und
c) in einem dritten Schritt die künstliche Intelligenz (29, 58) das erhaltene Abbild mit einem Referenzabbild vergleicht, wobei das Referenzabbild von einem vorgegebenen vollständigen Objekt abgeleitet wurde.

2. Verfahren nach Patentanspruch 1, **dadurch gekennzeichnet, dass**, nachdem das erste Objekt (30, 48, 60) vermessen wurde, ein zweites Objekt (22, 59) der Messstation (25, 45, 55) zugeführt wird und die Schritte b) und c) wiederholt werden.

3. Verfahren nach Patentanspruch 1 oder 2, **dadurch gekennzeichnet, dass** in einem vierten Schritt das Objekt aussortiert wird, falls das erhaltene Abbild nicht mit dem Referenzabbild übereinstimmt oder dass das Objekt zu einer weiteren Station transportiert wird, falls das erhaltene Abbild mit dem Referenzabbild übereinstimmt.

4. Verfahren nach Patentanspruch 3, **dadurch gekennzeichnet, dass** das nicht aussortierte Objekt in der weiteren Station verpackt oder weiterverarbeitet wird.
